# EUROPEAN PATENT SPECIFICATION

(11) **EP 3 027 946 B1**
(45) Date of publication and mention of the grant of the patent: **17.01.2018**
(21) Application number: 14749959.4
(22) Date of filing: 29.07.2014
(51) Int. Cl.: F16K 31/40, F16K 27/02

(54) **A VALVE ASSEMBLY FOR HAZARDOUS ENVIRONMENTS**
VENTILANORDNUNG FÜR GEFÄHRLICHE UMGEBUNGEN
ENSEMBLE SOUPAPE POUR ENVIRONNEMENTS DANGEREUX

(30) Priority: 02.08.2013 GB 201313874
(43) Date of publication of application: 08.06.2016
(73) Proprietor: Parker Hannifin Manufacturing Limited, Crewkerne, Somerset TA18 8LL (GB)
(72) Inventor: DEL RIO, Alexis, Crewkerne Somerset TA18 8LL (GB)
(74) Representative: Jones, David Alan
(86) International application number: PCT/GB2014/052324
(87) International publication number: WO 2015/015191

(56) References cited:
- US-A- 5 174 544
- US-A1- 2005 011 555
- US-A1- 2009 285 650

## Description

The present invention relates to a valve used in hazardous applications, and in particular to an electromechanical solenoid valve for mitigating the risk of flaming ingress from an explosion zone.

Solenoid valves are commonly used in hydraulic systems and they typically operate as pilot valves. An electromechanical solenoid valve is controlled by an electric current to a solenoid. The solenoid includes an electric coil arranged to operate an armature which can be actuated to open and close a flow channel.

The conditions in which solenoid valves operate may be broadly categorised as 'hazardous' or 'non-hazardous'. A hazardous environment may include the possibility of the surrounding atmosphere being an explosive gas or dust mixture. In hazardous environments it is required that all electrical components are shielded from the explosive atmosphere to avoid the electrical components acting as an ignition source.

It is known in hazardous environments to locate electrical components such as solenoid valves within an explosion chamber. The valves are arranged such that the electrical components are located within the explosion chamber which acts to control and contain any spark or ignition source to prevent exposure to the external hazardous atmosphere.

In addition to preventing propagation of the initial combustion or spark source to the external hazardous environment, it is also critical that should any such explosion occur within the explosion chamberthat combustion does not spread to the hydraulic fluid which would cause a serious incident in itself as well as risking external combustion release.

Containing the solenoid valve within the explosion chamber allows a lower specification part to be used, as external location of the solenoid valve requires the valve itself to include far more highly specified and toleranced components to avoid the valve presenting an ignition risk.

Where solenoid valves are connected to a manifold such that the solenoid and other electrical aspects of the valve are located within the explosion chamber a seal is provided at the point the solenoid connects to the manifold to provide a sealed barrier between the hydraulic process fluid and the explosion chamber. However, in higher pressure hydraulic systems the increased pressure increases the risk of primary seal failure. In the event of such failure high pressure hydraulic fluid may be released into the explosion chamber which would present a greatly increased explosion risk. It is therefore important, especially for higher pressure applications, that the risk of such leakage and pressure rise is mitigated.

It is therefore desirable to provide an improved solenoid valve assembly which addresses the above described problems and/or provides improvements generally.

According to the present invention there is provided a valve assembly as described in the accompanying claims. In addition there is provided a hydraulic actuator assembly as described in the accompanying claims.

In an embodiment of the invention there is provided a valve assembly comprising a valve including a valve body and a movable valve closure member; a manifold including a bore having a valve opening through which the valve is received into the bore, and at least one process fluid pathway defined within the manifold in fluid communication with the bore. The valve includes a proximal end section arranged to close the valve opening and an opposing distal end located within the bore inwardly of the proximal end, and the valve closure member is arranged to open and close the at least one fluid pathway. A primary seal is located between the valve body and the manifold to seal the valve opening and a secondary seal located inwardly of the primary seal along the bore relative to the valve opening arranged to create a seal between and the valve body and the bore to isolate the primary seal from the first fluid pathway. The valve assembly further includes a vent port in fluid communication with the bore located along the bore between the primary seal and the secondary seal.

The secondary seal seals and isolates the primary seal from the process fluid. As such, there is no process fluid pressure on the primary seal and a buffer chamber is defined between the primary and secondary seals, which is sealed from the process fluid. Therefore, in the event of primary seal failure the process fluid remains sealed from the explosion chamber and there is no fluid release into the chamber and no associated pressure rise thereby obviating the explosion risk. Furthermore, in the event of an explosion within the chamber a double seal barrier is provided between the explosion chamber and the hydraulic process fluid to mitigate the risk of combustion of the hydraulic process fluid.

The valve body and the manifold include corresponding threads defining a threaded connection located between the primary seal and the secondary seal. The screw thread arrangement extends between the valve body and bore of the manifold along the buffer chamber. The low cross-sectional area and relatively long length of the thread acts as a damper to muffle any explosion that may pass the primary seal, thereby protecting the secondary seal in the event of an explosion. In the reverse direction, in eth event of secondary seal failure the fluid pressure at the primary seal is minimised by forcing the process fluid to flow through the thread.

The vent port is preferably located inwardly of at least a portion of the threaded connection along the length of the bore. In this way, the pressure of any explosion gases when they reach the vent port is minimised by the gases being forced through at least part of the thread before reaching the vent, thereby minimising the vent pressure. The vent port is spaced inwardly along the length of the bore from the threaded connection, thereby ensuring that the explosion is caused to travel the entire length of the thread before reaching the vent.

The threaded connection preferably includes at least five thread turns. The greater the number of thread turns the greater the dampening properties of the thread. However, typically within such valve assemblies space is at a premium and it has been found that five turns provides acceptable dampening while minimising thread length.

The valve assembly may include an explosion chamber in the form of a pressure vessel to which the manifold is secured such that the valve opening of the bore and the face of the manifold in which it is formed faces inwardly into the pressure vessel. The primary seal is arranged to provide a seal between the interior of the pressure vessel and valve bore of the manifold. The valve is preferably an electromechanical solenoid valve comprising an electrical coil and an armature configured to actuate the valve member, wherein the electrical coil is located at the proximal end of the valve body outwardly of the primary seal and within the pressure vessel. As such, the electrical components of the valve are contained within the pressure vessel and isolates by the primary and secondary seals from both the external hazardous environment and from the process fluid.

The valve body comprises a main body section having a bore which slidingly houses the armature, a head section secured to the main body section at least part of which is located inwardly of the main body section along the bore, and a spool slidingly received within a spool chamber in the head section to open and close an opening at the inner end of the head section, and a needle member movable by the armature to hold in the spool in the closed position in a first configuration, the needle and the spool defining the closure member; the manifold includes an inlet port and an outlet port and the valve includes a corresponding port located adjacent the inlet port which defines a fluid pathway between the inlet port and the outlet port via the spool chamber and the open end of the head; wherein a portion of the head section is received within a bore of in the main body section to secure the head to the body section and a third seal is provided between the outer surface of the head section and the bore of the main body section to prevent the flow of process fluid into the space between the primary and secondary seals.

The secondary seal is located outwardly along the bore of the inlet port and a fourth seal is provided inwardly along the bore of the inlet port to seal the inlet port along the length of the bore.

The primary and secondary seals may be annular resilient seals and are preferably o-ring seals.

In another aspect of the invention a hydraulic actuator assembly comprises a hydraulic actuator, a pump arranged to supply pressurised hydraulic to the actuator and a valve assembly as described arranged to control the supply of fluid to the actuator from the pump.

A valve assembly comprising the features referred in the preamble of claim 1 is known from US 2005/0011555 A1. The present invention will now be described by way of example only with reference to the following illustrative figures in which:
Figure 1 shows a hydraulic actuator assembly;
Figure 2a shows a valve assembly according to the present invention in the closed position;
Figure 2b shows the valve assembly of Figure 2a with the solenoid actuated and needle retracted and spool still in the closed position; and
Figure 2c shows the valve assembly of Figure 2a in the fully open position with the solenoid actuated and needle and spool retracted.

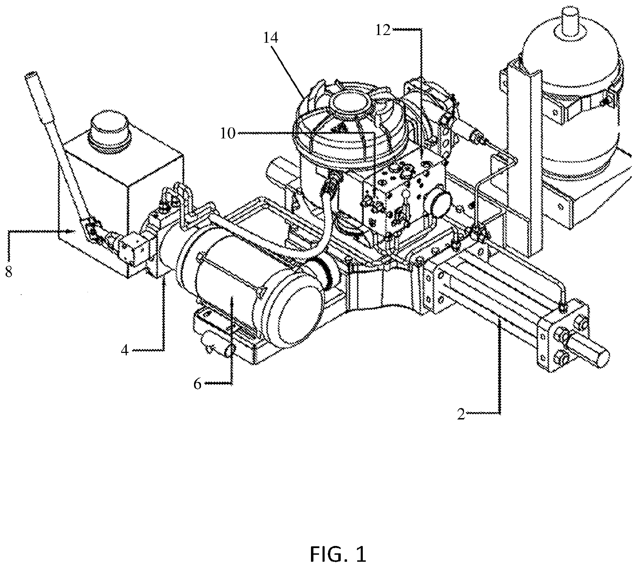

Referring to Figure 1 a hydraulic actuator mechanism for use in a hazardous environment comprises a hydraulic cylinder 2 that is actuated by a hydraulic system including a pump 4 driven by a motor 6. The pump 4 drives hydraulic fluid from a hydraulic reservoir 8. Flow of the hydraulic fluid to the hydraulic cylinder 2 is controlled by one or more solenoid valves.

The solenoid valves are mounted within a manifold 12 within which a series of fluid channels are defined.

The manifold 12 is connected to a pressure vessel 14 that is configured as a flame resistant explosion chamber. The explosion chamber 14 is sealed from the external atmosphere and configured to contain and isolate any spark or ignition occurring within the chamber 14. The manifold 12 has an inner face which faces inwardly into the explosion chamber 14.

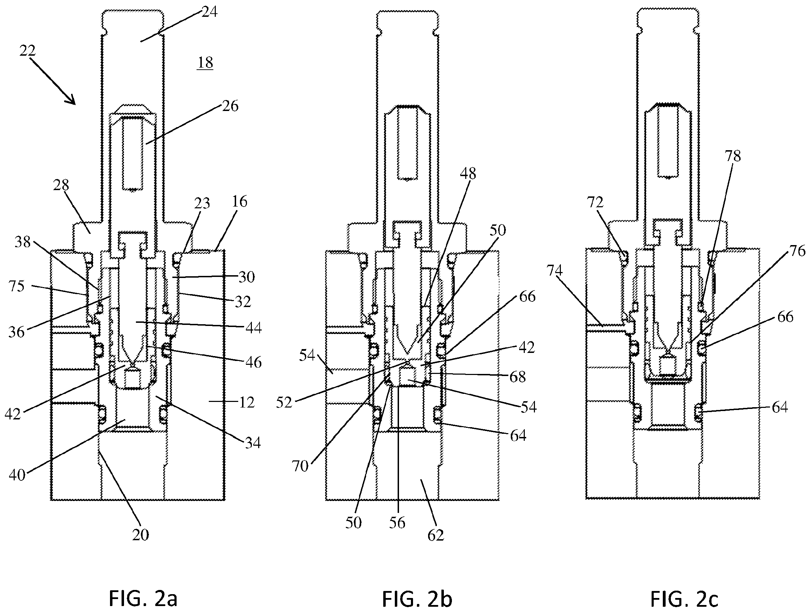

As shown in Figure 2a the inner face 16 of the manifold 12 faces inwardly into the inner volume 18 of the explosion chamber 14 such that it is in open contact with the atmosphere within the chamber 14. A bore 20 is formed in the body of the manifold 12 and is configured to receive a solenoid valve 22 through a valve opening 23. The solenoid valve 22 includes a solenoid body 24 and an armature 26 that is slidingly received in a bore formed within the solenoid body 24. The solenoid body 24 includes a main cylindrical body section and a flange or shoulder 28 which acts as a stop for locating the solenoid body against the inner surface 16 of the manifold 12. A cylindrical inner portion 30 extends longitudinally inwardly into the manifold 12 from the shoulder 28 and includes a threaded portion 32 which engages with a corresponding threaded portion on the bore 20 of the manifold 12.

A cylindrical valve head section 34 is located at the longitudinal inner end of the solenoid body. The terms 'inner' and 'outer' are relative and refer to the relative positions of the components in the longitudinal direction relative to the manifold with inward referring to the longitudinal inwardly directly into the manifold and outwardly being in the direction of the explosion chamber 14. The first end 36 of the head 34 is received within the inner end section 30 of the solenoid body. A threaded fastening section 38 secures the head 34 to the inner bore of the solenoid body 24. The head 34 includes an inner bore 40. A spool 42 is received within the inner bore 40 of the head 34, and is configured to slide within a section of the bore 40. A poppet or needle 44 is received within an inner bore 46 of the spool 42.

As shown in Figure 2b the spool 42 includes an opening 48 at its outer end which receives the needle 44. A chamber 50 is defined within the spool having the opening 48 at its outer end and a reduced diameter opening 52 at its opposed inner end. The reduced diameter opening 52 defines an inlet channel into the chamber 50. As the channel 52 extends longitudinally inwardly it expands into a larger diameter channel 54 defining the mouth of the spool 42. The longitudinally inner end 56 of the spool 42 is longitudinal limited in movement by a stop 58 defined by a reduced diameter step in the inner bore 40 of the valve head 34.

An inlet port 60 is defined in the manifold and is arranged transverse to the longitudinal axis of the bore 20. The inner end of the bore 20 defines an outlet port 62. O-ring seals 64 and 66 are provided in corresponding annular grooves in the outer surface of the head 34 and are arranged longitudinally either side of the inlet port 60. A chamber 68 is defined between the spool 42 and the inner bore 40 of the head 34 at the inner end of the spool 42. A port 70 extending through the head connects the chamber 68 with the inlet port 60.

As shown in Figure 2c a further seal 72 is provided between the shoulder 28 of the solenoid body 24 and the manifold body 12 proximate the valve opening which seals between the valve body 24 and the manifold 12 to close the valve opening 23. The seal 72 defines a primary seal located at the interface between the valve bore 20 and the explosion chamber 14 for preventing flame propagation into the bore 20 in the event of an ignition within the explosion chamber 14. The seal 66 which is located longitudinally inwards of the primary seal 72 towards the process end of the solenoid valve 22 defines a secondary seal which provides a back-up for preventing the propagation of flames through the bore 22 and in particular preventing flame contact with the hydraulic fluid in the event of failure of the primary seal 72. The secondary seal 66 also isolates the primary seal 72 from the hydraulic fluid such that the primary seal 72 is not in contact with or pressurised by the hydraulic fluid, with a buffer chamber 75 being defined between the primary seal 72 and the secondary seal 66. As such, in the event of failure of the primary seals 72 pressurised hydraulic fluid would not enter into the explosion chamber 18 thereby avoiding an elevation in the pressure of the chamber 14 and preventing the dispersal of flammable liquid into the chamber 14.

A vent port 74 is defined in the manifold 12 and is located longitudinally along the bore 20 between the primary seal 72 and secondary seal 66. The vent port 74 is in fluid contact with the bore 20 and extends in a direction transverse to the longitudinal axis of the bore 20. The vent port 74 is located on the process side of the thread 32 between the solenoid body 24 and the bore 20 of the manifold 12 towards the secondary seal 66 at the longitudinal inward end of the thread 32 in fluid communication with the bore 20.

In use the needle 44 or spindle is biased to the closed position as shown in Figure 2a in which the tip of the needle 44 is received within the opening 52 to close the opening. The needle 44 is biased to the closed position by a spring (not shown) which engages the armature 26 to urge the armature 26 against the needle to urge the needle 44 to the closed position. Hydraulic fluid from the inlet 60 enters the chamber 68 via the port 70 and pressurises the chamber 68. The pressurised fluid acts on the shoulder 76 of the spool 42. The spring force is selected such that it is greater than the pressure acting on the shoulder 76 so that in a closed position with the coil of the solenoid turned off the pressurised inlet fluid is unable to move the spool 42. In the closed position the seating engagement of the end of the spool 42 against the shoulder 58 of the head 34 closes the bore 40 of the head 34 and prevents fluid flow from the inlet 60 into the outlet port 62.

When the solenoid coil is operated to actuate the armature 26 the needle 44 is retracted by the armature 26 moving the tip of the needle 44 out of the opening 52 and out of engagement with the spool 42. With the needle 44 disengaged the pressure within the chamber 68 acts on the shoulder 76 to slide the spool 42 away from engagement with the shoulder 58 to open a fluid pathway between the inner port 60 and outer port 62 via the mouth 40 of the head 34. The spool 42 continues to move longitudinally away from the shoulder 58 until it re-engages with the needle 44. The spool 42 is then held in this position by the hydraulic fluid pressure acting against it with this positioning defining the fully opened condition of the valve 22. To close the valve 22 the solenoid is de-activated which removes the retraction force of the armature 26 such that the spring force is able to overcome the hydraulic pressure force and return the spool 42 to the closed position thereby closing the valve 22.

Hydraulic fluid is prevented from passing to the primary seal 72 between the solenoid body 24 and the manifold 12 by the secondary seal 66. In arrangements of the prior art where only two seals are provided the primary seal is pressurised and contacted by the hydraulic fluid providing the sole barrier between the hydraulic fluid and the explosion chamber. As such, in the event of failure of the primary seal the hydraulic fluid is immediately dispersed into the explosion chamber which significantly increases the pressure in the explosion chamber and thereby dramatically raises the explosion risk. In the arrangement of the present invention the secondary seal 66 isolates the primary seal 72 from the process fluid to prevent this occurrence.

Once the valve 22 has opened and hydraulic fluid passes into the spool 42 there is the potential for hydraulic fluid to travel to the primary seal 72 via a pathway defined between the inner surface of the solenoid body 24 and the outer surface of the head 34 and onwards past the inner end of the solenoid body into the buffer cavity 75 between the solenoid body 24 and the manifold 12. This is prevented by a third" seal 78 which is provided between the outer surface of the head 34 and the inner surface of the bore of the solenoid body 24 on the process side of the threaded section 38 at its longitudinally inward end.

The vent port 74 is located with the buffer chamber 75 between the primary seal 72 and secondary seal 66. In the event of failure of the secondary seal 66 hydraulic fluid passing the seal 66 into the buffer chamber 75 between the head 34 and the manifold 12 would reach the vent port 74 before the primary seal 72. The pressurised fluid would be vented via the vent ports 74. As such, while it is possible that some hydraulic fluid may continue towards with the primary seal 72 the pressure at the primary seal 72 would be significantly less than process pressure due to the venting. Therefore, the risk of primary seal failure due to internal fluid pressure is mitigated. Furthermore, even if the primary seal 72 were also to fail the fluid would not be dispersed into the explosion chamber under high pressure and rather the high pressure hydraulic fluid would be vented via the vent port 74 with no significant pressure rise being experienced within the explosion chamber 14 or and any significant disbursement of hydraulic fluid occurring.

In the event of an explosion the primary seal 72 prevents propagation of the explosion into the bore 20. In the event of failure of the primary seal 72 during an explosion event the secondary seal 66 provides a further barrier between the explosion and the pressurised hydraulic process fluid. In a single seal arrangement of the prior art failure of the primary seal under explosion conditions would have resulted in instantaneous contact between the propagating explosion and the hydraulic fluid. In the present invention, in addition to the secondary seal 66 providing a secondary flame barrier between the explosion chamber 14 and the hydraulic fluid, the vent port 74 enables the high pressure from the explosion to be dissipated before it reaches the secondary seal 66 thereby avoiding the secondary seal 66 experiencing the full explosion pressure.

The vent 74 is located on the process side of the thread 32 between the solenoid body and the manifold 12. The thread 32 preferably includes at least five full thread turns. In the event of failure of the primary seal 72 the explosion would propagate down the bore 20 between the solenoid body 24 and the manifold 12 via the thread 32. The length and small cross-sectional area of the pathway defined by the thread 32 would rapidly dissipate the explosion pressure acting as a damper with any residual pressure then being dissipated via the vent 74 located on the process side of the thread 32. This assures that the vent 74 is not exposed to the full explosion pressure.

Therefore, the present invention provides hydraulic fluid containment separation through a double seal arrangement, with the primary seal providing the main interface and a secondary internal seal providing protection against primary seal failure. The chamber contained between the two seals is vented to provide further protection against fluid leakage and explosion propagation. The combination of the vent port 74 and the secondary seal 66 mitigate both the risk of high pressure fluid engaging and pressurising the primary seal internally in the event of failure of the secondary seal 66 also isolating and protecting the hydraulic fluid from flame contact in the event of an explosion. Furthermore, the location of the vent 74 on the process side of the thread 32 between the solenoid body 24 and the manifold 12 further mitigates the risk of hydraulic fluid combustion by enabling the explosion pressure to be dissipated via the thread 32 before then being vented by the vent port 74.

## Claims

1. A valve assembly comprising:
a valve (22) including a valve body (24) and a movable valve closure member (42, 44); a manifold (12) including a bore (20) having a valve opening (23) through which the valve is received into the bore, and at least one process fluid pathway defined within the manifold in fluid communication with the bore, the valve including a proximal end section arranged to close the valve opening and an opposing distal end located within the bore inwardly of the proximal end, and the valve closure member is arranged to open and close the at least one fluid pathway;
a primary seal (72) located between the valve body and the manifold to seal the valve opening and a secondary seal (66) located inwardly of the primary seal along the bore relative to the valve opening arranged to create a seal between the valve body and the bore to isolate the primary seal from the at least one process fluid pathway; and
a vent port (74) in fluid communication with the bore and located along the bore between the primary seal and the secondary seal;
**characterised in that** the valve body and the manifold include corresponding threads defining a threaded connection located between the primary seal and the secondary seal and the vent port is located inwardly of at least a portion of the threaded connection along the length of the bore.

2. A valve assembly according to claim 1 wherein the vent port is spaced inwardly along the length of the bore from the threaded connection.

3. A valve assembly according to any preceding claim wherein the threaded connection includes at least five thread turns.

4. A valve assembly according to any preceding claim further including a pressure vessel, wherein the manifold is secured to the pressure vessel such that the open end of the bore faces inwardly into the pressure vessel and wherein the primary seal is arranged to provide a seal between the interior of the pressure vessel and valve bore of the manifold.

5. A valve assembly according to claim 3 wherein the valve is an electromechanical solenoid valve comprising an electrical coil and an armature configured to actuate the valve member, wherein the electrical coil is located at the proximal end of the valve body outwardly of the primary seal and within the pressure vessel.

6. A valve assembly according to claims 4 and 5 wherein the valve body comprises a main body section having a bore which slidingly houses the armature, a head section secured to the main body section at least part of which is located inwardly of the main body section along the bore, and a spool slidingly received within a spool chamber in the head section to open and close an opening at the inner end of the head section, and a needle member movable by the armature to hold in the spool in the closed position in a first configuration, the needle and the spool defining the closure member; the manifold includes an inlet port and an outlet port and the valve includes a corresponding port located adjacent the inlet port which defines a fluid pathway between the inlet port and the outlet port via the spool chamber and the open end of the head; wherein a portion of the head section is received within a bore of the main body section to secure the head to the body section and a third seal is provided between the outer surface of the head section and the bore of the main body section to prevent the flow of process fluid into the space between the primary and secondary seals.

7. A valve assembly according to claim 5 wherein the secondary seal is located outwardly along the bore of the inlet port and a fourth seal is provided inwardly along the bore of the inlet port.

8. A hydraulic actuator assembly comprising a hydraulic actuator, a pump arranged to supply pressurised hydraulic fluid to the actuator and a valve assembly according to any preceding claim arranged to control the supply of fluid to the actuator from the pump.

9. A valve assembly according to any one of claims 1 to 7 wherein a buffer chamber is defined between the primary and secondary seals which is sealed from the first fluid pathway to isolate the primary seal from the process fluid.

## Patentansprüche

1. Ventilanordnung, umfassend:
ein Ventil (22), das einen Ventilkörper (24) und ein bewegliches Ventilverschlusselement (42, 44) einschließt;
einen Verteiler (12), der eine Bohrung (20) mit einer Ventilöffnung (23), durch die das Ventil in der Bohrung aufgenommen wird, und mindestens einen Prozessflüssigkeitspfad, der in dem Verteiler definiert ist, in Fließkommunikation mit der Bohrung einschließt, wobei das Ventil einen nahen Endabschnitt, der zum Schließen der Ventilöffnung vorgesehen ist, und ein gegenüberliegendes fernes Ende einschließt, das sich innerhalb der Bohrung einwärts von dem nahen Ende befindet, und wobei das Ventilverschlusselement vorgesehen ist, um den mindestens einen Flüssigkeitspfad zu öffnen und zu schließen;
eine Primärdichtung (72), die sich zwischen dem Ventilkörper und dem Verteiler befindet, um die Ventilöffnung abzudichten, und eine Sekundärdichtung (66), die sich einwärts von der Primärdichtung entlang der Bohrung relativ zu der Ventilöffnung befindet und vorgesehen ist, um eine Dichtung zwischen dem Ventilkörper und der Bohrung zu erzeugen, um die Primärdichtung von dem mindestens einen Prozessflüssigkeitspfad zu isolieren; und
einen Ablassanschluss (74) in Fließkommunikation mit der Bohrung, der sich entlang der Bohrung zwischen der Primärdichtung und der Sekundärdichtung befindet;
**dadurch gekennzeichnet, dass** der Ventilkörper und der Verteiler entsprechende Gewinde einschließen, die eine Schraubverbindung definieren, die sich zwischen der Primärdichtung und der Sekundärdichtung befindet, und der Ablassanschluss sich einwärts von mindestens einem Teil der Schraubverbindung entlang der Länge der Bohrung befindet.

2. Ventilanordnung nach Anspruch 1, wobei der Ablassanschluss entlang der Länge der Bohrung von der Schraubverbindung einwärts beabstandet ist.

3. Ventilanordnung nach einem der vorhergehenden Ansprüche, wobei die Schraubverbindung mindestens fünf Gewindegänge einschließt.

4. Ventilanordnung nach einem der vorhergehenden Ansprüche, die ferner ein Druckgefäß einschließt, wobei der Verteiler so an dem Druckgefäß gesichert ist, dass das offene Ende der Bohrung einwärts in das Druckgefäß weist, und wobei die Primärdichtung vorgesehen ist, um eine Dichtung zwischen dem Inneren des Druckgefäßes und einer Ventilbohrung des Verteilers bereitzustellen.

5. Ventilanordnung nach Anspruch 3, wobei das Ventil ein elektromechanisches Magnetventil ist, das eine elektrische Spule und einen Anker umfasst, der ausgestaltet ist, um das Ventilelement zu betätigen, wobei die elektrische Spule sich an dem nahen Ende des Ventilkörpers auswärts der Primärdichtung und innerhalb des Druckgefäßes befindet.

6. Ventilanordnung nach den Ansprüchen 4 und 5, wobei der Ventilkörper einen Hauptkörperabschnitt mit einer Bohrung, die den Anker gleitend beherbergt, einen Kopfabschnitt, der an dem Hauptkörperabschnitt gesichert ist, von dem sich mindestens ein Anteil einwärts des Hauptkörperabschnitts entlang der Bohrung befindet, und einen Kolben, der gleitend innerhalb einer Kolbenkammer in dem Kopfabschnitt aufgenommen ist, um eine Öffnung an dem inneren Ende des Kopfabschnitts zu öffnen und zu schließen, und ein Nadelelement umfasst, das durch den Anker bewegbar ist, um den Kolben in der geschlossenen Position in einer ersten Konfiguration zu halten, wobei die Nadel und der Kolben das Verschlusselement definieren; wobei der Verteiler einen Einlassanschluss und einen Auslassanschluss einschließt und das Ventil einen entsprechenden Anschluss einschließt, der sich neben dem Einlassanschluss befindet, der einen Flüssigkeitspfad zwischen dem Einlassanschluss und dem Auslassanschluss über die Kolbenkammer und das offene Ende des Kopfes definiert; wobei ein Teil des Kopfabschnitts innerhalb einer Bohrung des Hauptkörperabschnitts aufgenommen wird, um den Kopf an dem Körperabschnitt zu sichern, und eine dritte Dichtung zwischen der Außenfläche des Kopfabschnitts und der Bohrung des Hauptkörperabschnitts bereitgestellt ist, um den Fluss von Prozessflüssigkeit in den Raum zwischen der Primärdichtung und der Sekundärdichtung zu verhindern.

7. Ventilanordnung nach Anspruch 5, wobei die Sekundärdichtung sich auswärts entlang der Bohrung des Einlassanschlusses befindet und eine vierte Dichtung einwärts entlang der Bohrung des Einlassanschlusses bereitgestellt ist.

8. Hydraulische Aktoranordnung, umfassend einen hydraulischen Aktor, eine Pumpe, die zum Zuführen von druckbeaufschlagter Hydraulikflüssigkeit zu dem Aktor vorgesehen ist, und eine Ventilanordnung gemäß einem der vorhergehenden Ansprüche, die zur Steuerung der Zufuhr von Flüssigkeit von der Pumpe zu dem Aktor vorgesehen ist.

9. Ventilanordnung nach einem der Ansprüche 1 bis 7, wobei eine Pufferkammer zwischen der Primärdichtung und der Sekundärdichtung definiert ist, die zu dem ersten Flüssigkeitspfad abgedichtet ist, um die Primärdichtung gegenüber der Prozessflüssigkeit zu isolieren.

## Revendications

1. Ensemble de soupape, comprenant :
une soupape comportant un corps de soupape (24) et un organe de fermeture de soupape mobile (42, 44) ;
un collecteur (12) comportant un alésage (20) ayant une ouverture de soupape (23) à travers laquelle la soupape est reçue dans l'alésage, et au moins un chemin de fluide de travail défini à l'intérieur du collecteur, en communication fluidique avec l'alésage, la soupape comportant une section d'extrémité proximale disposée de manière à fermer l'ouverture de soupape et une extrémité distale opposée située à l'intérieur de l'alésage vers l'intérieur de l'extrémité proximale, et l'organe de fermeture de soupape étant prévu pour ouvrir et fermer l'au moins un chemin de fluide ;
un joint primaire (72) situé entre le corps de soupape et le collecteur pour sceller l'ouverture de soupape et un joint secondaire (66) situé vers l'intérieur du joint primaire le long de l'alésage par rapport à l'ouverture de soupape, prévu pour créer un joint entre le corps de soupape et l'alésage pour isoler le joint primaire de l'au moins un chemin de fluide de travail ; et
un orifice de ventilation (74) en communication fluidique avec l'alésage et situé le long de l'alésage entre le joint primaire et le joint secondaire ;
**caractérisé en ce que** le corps de soupape et le collecteur comportent des filetages correspondants définissant une connexion filetée située entre le joint primaire et le joint secondaire, et l'orifice de ventilation est situé vers l'intérieur d'au moins une portion de la connexion filetée le long de la longueur de l'alésage.

2. Ensemble de soupape selon la revendication 1, dans lequel l'orifice de ventilation est espacé vers l'intérieur le long de la longueur de l'alésage depuis la connexion filetée.

3. Ensemble de soupape selon l'une quelconque des revendications précédentes, dans lequel la connexion filetée comporte au moins cinq filets.

4. Ensemble de soupape selon l'une quelconque des revendications précédentes, comportant en outre un récipient sous pression, le collecteur étant fixé au récipient sous pression de telle sorte que l'extrémité ouverte de l'alésage soit tournée vers l'intérieur dans le récipient sous pression, et le joint primaire étant prévu de manière à fournir un joint entre l'intérieur du récipient sous pression et l'alésage de soupape du collecteur.

5. Ensemble de soupape selon la revendication 3, dans lequel la soupape est une électrovanne électromécanique comprenant une bobine électrique et une armature configurée pour actionner l'organe de soupape, la bobine électrique étant située à l'extrémité proximale du corps de soupape vers l'extérieur du joint primaire et à l'intérieur du récipient sous pression.

6. Ensemble de soupape selon les revendications 4 et 5, dans lequel le corps de soupape comprend une section de corps principal ayant un alésage qui reçoit de manière coulissante l'armature, une section de tête fixée à la section de corps principal dont au moins une partie est située vers l'intérieur de la section de corps principal le long de l'alésage, et une bobine reçue de manière coulissante à l'intérieur d'une chambre de bobine dans la section de tête afin d'ouvrir et de fermer une ouverture au niveau de l'extrémité intérieure de la section de tête, et un organe d'aiguille pouvant être déplacé par l'armature de manière à retenir la bobine dans la position fermée dans une première configuration, l'aiguille et la bobine définissant l'organe de fermeture ; le collecteur comportant un orifice d'entrée et un orifice de sortie et la soupape comportant un orifice correspondant situé en position adjacente à l'orifice d'entrée, qui définit un chemin de fluide entre l'orifice d'entrée et l'orifice de sortie par le biais de la chambre de bobine et l'extrémité ouverte de la tête ; une portion de la section de tête étant reçue à l'intérieur d'un alésage de la section de corps principal pour fixer la tête à la section de corps et un troisième joint étant prévu entre la surface extérieure de la section de tête et l'alésage de la section de corps principal pour empêcher l'écoulement de fluide de travail dans l'espace entre les joints primaire et secondaire.

7. Ensemble de soupape selon la revendication 5, dans lequel le joint secondaire est situé vers l'extérieur le long de l'alésage de l'orifice d'entrée et un quatrième joint est prévu vers l'intérieur le long de l'alésage de l'orifice d'entrée.

8. Ensemble d'actionneur hydraulique comprenant un actionneur hydraulique, une pompe prévue pour fournir un fluide hydraulique sous pression à l'actionneur et un ensemble de soupape selon l'une quelconque des revendications précédentes, prévu pour réguler l'alimentation de fluide à l'actionneur à partir de la pompe.

9. Ensemble de soupape selon l'une quelconque des revendications 1 à 7, dans lequel une chambre tampon est définie entre les joints primaire et secondaire, laquelle est scellée vis-à-vis du premier chemin de fluide afin d'isoler le joint primaire du fluide de travail.
